# EUROPÄISCHE PATENTANMELDUNG

(11) **EP 1 958 756 A1**
(43) Veröffentlichungstag der Anmeldung: **20.08.2008**
(21) Anmeldenummer: 07023833.2
(22) Anmeldetag: 10.12.2007
(51) Int. Cl.: B29C 47/20

(54) **Axial- oder Konuswendelverteiler für eine Blasfolienanlage sowie Herstellverfahren einer mehrlagigen Folie**

(30) Priorität: 13.02.2007 DE 102007007675; 22.06.2007 DE 102007029310
(71) Anmelder: Kiefel Extrusion GmbH, 67547 Worms (DE)
(72) Erfinder: Hennes, Jochen, Dr., 65760 Eschborn (DE)
(74) Vertreter: Castell, Klaus

(57) **Zusammenfassung**

Die Erfindung betrifft Wendelverteiler an Axial- oder Konuswendelblasköpfen (1).

Die Erfindung hat erkannt, dass es von Vorteil sein kann, wenn bei zunehmendem Umfang einer Wendelschar (12,13,14) in einem Dralldornspalt (3,4,5,6) die Höhe der Wendeln begrenzt wird, so dass sich in etwa eine gleiche mit Wendeln überzogene Fläche bei den Dralldornspalten einstellt. Die Erfindung bezeichnet diese Fläche als "Aktivfläche".

Es werden zahlreiche Erfindungsaspekte vorgestellt, welche unterschiedliche Regeln angeben, wie die grundlegende Erkenntnis umgesetzt werden kann.

## Beschreibung

Die Erfindung betrifft einen Axial- oder Konuswendelverteiler für Blasfolienanlagen sowie ein Verfahren zum Herstellen einer mehrlagigen Folie.

In Blasfolienanlagen werden Folien hergestellt. Hierzu wird ein Thermoplast aufgeschmolzen und durch eine Ringschlitzdüse gepresst. Diese liegt horizontal, wobei die Schmelze schlauchförmig nach oben aus der Ringschlitzdüse austritt. Der sich ergebende Folienschlauch kühlt während des Emporsteigens immer weiter ab und erstarrt. In einer gewissen Höhe über der Ringschlitzdüse, nach dem Erstarren, wird die Folie flachgelegt und anschließend aufgewickelt.

Folien sind heutzutage oft mehrlagig. Zum Erzeugen einer mehrlagigen Folie werden mehrere Ringschlitzdüsen konzentrisch umeinander angeordnet, sodass sich entsprechend viele Folienschläuche ineinander nach oben erstrecken und dort zu der Folie zusammengelegt werden. Die Schmelzeströme der unterschiedlichen Lagen werden meist noch vor dem Austritt an die Luft zusammengeführt.

Der flüssige Thermoplast jeder Folienlage wird durch einen Kanal in einen eigenen Spalt eingepresst, welcher dann nach oben in die Ringschlitzdüse übergeht. Das Gebilde, in welchem die Kanäle, Spalte und Ringschlitzdüsen ausgebildet sind, wird als Blaskopf bezeichnet. In dem Blaskopf sind somit unterhalb der Ringschlitzdüsen entsprechende Ringschlitze ausgebildet. Die einzelnen Ringschlitze werden als Dralldomspalte bezeichnet. Jeder Dralldornspalt weist radial außen und radial innen eine Oberfläche des Blaskopfes auf. Diese den Spalt begrenzende Oberfläche wird als Dralldorn bezeichnet.

Es sei darauf hingewiesen, dass die Oberflächen eines Dralldoms dann zylindrisch geformt sind, wenn ein Axialwendelverteiler betrachtet wird. Bei einem Konuswendelverteiler haben die Oberflächen eines Dralldoms die Form von Kegelmantelflächen.

Um die Schmelze möglichst gleichmäßig ausblasen zu können, sind in die zylindrischen beziehungsweise kegelmantelförmigen Oberflächen der Dralldorne, welche die Dralldornspalte begrenzen, schraubenförmige Kanäle eingebracht. Diese Kanäle werden als "Wendel" bezeichnet.

Die Wendel verlaufen auf einer Abwicklung der Zylinderfläche jeder für sich in etwa gerade erstreckt, aber in einem spitzen Winkel angeordnet. Auf einer Abwicklung der Kegelmantelfläche hingegen verlaufen die Wendel jeder für sich schraubenförmig um einen Mittelpunkt der Abwicklung, und zwar in einem spitzen Winkel zu einer Tangentialrichtung angeordnet.

Da sich die Wendel sowohl bei Axialwendelverteilern als auch bei Konuswendelverteilern schraubenförmig über die Oberflächen der Dralldorne erstrecken, und zwar entweder auf einer Oberfläche eines Dralldoms oder auf beiden Oberflächen eines Dralldorns, verteilt sich die Schmelze durch die Wendel relativ homogen in den Dralldomspalten.

Die Wendel innerhalb eines Dralldornspalts werden im Rahmen dieser Anmeldung als eine "Wendelschar" bezeichnet.

Wenn in der Abwicklung der Wendelschar eines Dralldornspalts eine kleinste Umgebende um die Wendeln gelegt wird, ist diese in der Regel rechteckig, wenn eine Wendelschar an einem Axialwendelverteiler abgewickelt wird, beziehungsweise kreisringförmig, wenn die Wendelschar eines Dralldornspalts an einem Konuswendelverteiler abgewickelt wird.

Die durch die kleinste Umgebende umfasste Fläche wird im Rahmen der vorliegenden Anmeldung als "Aktivfläche" bezeichnet.

Die JP 56-67223 B zeigt einen Axialwendelverteiler mit vier Dralldomspalten. In jedem Dralldornspalt ist genau eine Dralldornoberfläche mit einer Wendelschar versehen, und zwar liegen an drei radial inneren Dralldornspalten die Wendel jeweils an der radial innen liegenden Oberfläche. In einem vierten, radial außen liegenden Dralldornspalt sind die Wendel an der radial äußeren Oberfläche des Dralldornspalts angeordnet.

Aus konstruktiven Gründen, nämlich wegen des Platzerfordernisses, sind die Höhen einiger Aktivflächen unterschiedlich ausgebildet. Immer dort, wo nicht mehr Platz zur Verfügung stand, wurden die Aktivflächen begrenzt. So sind am innersten Dralldomspalt sechs Wendel geschnitten dargestellt, bei seinem radial außen benachbarten Dralldomspalt nur vier Wendel, bei dessen radial außen benachbarten Dralldomspalt nur drei Wendel, bei dem radial äußersten Dralldomspalt hingegen wieder vier Wendel, weil dort ein Knick in der Dralldornoberfläche erst relativ weit oben erfolgt.

Die US 3,957,566 D1 zeigt einen reinen Axialwendelverteiler mit zwei Dralldornspalten, die eine gleich hohe Aktivfläche mit jeweils fünf geschnittenen Wendeln haben.

Die DE 203 07 412 U1 zeigt einen Axialwendelverteiler mit drei konzentrischen Dralldornspalten, wobei in jedem Dralldomspalt radial innen und radial außen Wendel angeordnet sind.

Die US 5,690,972 B zeigt einen Konuswendelverteiler mit in jedem Dralldornspalt identisch auf der radial innen liegenden Oberfläche angeordneten Wendeln.

Die EP 1 055 504 A1 zeigt einen Wendelverteiler mit radialen und konusförmigen Dralldornspalten, welche jeweils hinsichtlich der Wendel identisch aufgebaut sind.

Die EP 0 051 358 A1 zeigt einen Axialwendelverteiler, bei welchem an einem einzigen Dralldornspalt die diesen begrenzenden Oberflächen unterschiedliche Höhen haben können. Auf die Wendel geht die Druckschrift jedoch nicht ein.

Weitere Wendelverteiler oder Blasköpfe sind in der EP 0 061 935 A2, in der JP 10-166424 B, in der US 3,876,740 B, in der EP 1 116 569 B1, in der DE 44 07 060 A1, in der US 4,201,532 B oder in der JP 57-189820 B gezeigt.

Der Erfindung liegt die Aufgabe zugrunde, verbesserte Blasköpfe zur Verfügung zu stellen. Diese Aufgabe wird mit den Merkmalen der unabhängigen Patentansprüche gelöst. Vorteilhafte Ausgestaltungen sind den abhängigen Ansprüchen zu entnehmen.

Nach einem ersten Aspekt der Erfindung löst die gestellte Aufgabe ein Axial- oder Konuswendelverteiler für eine Blasfolienanlage, mit einem inneren Dralldornspalt mit einer inneren Wendelschar und mit einem äußeren Dralldornspalt mit einer äußeren Wendelschar, wobei die Wendelscharen der Dralldomspalte durch ihre Umgebenden eine innere und eine äußere Aktivfläche definieren, wobei jede äußere Aktivfläche in Bezug zu zumindest einer überwiegenden Zahl innerer Aktivflächen eine geringere Höhe aufweist.

Diesem Aspekt der Erfindung liegt die Erkenntnis zugrunde, dass bei einem radial außen liegenden Dralldornspalt der Radius und somit der Umfang größer sind als bei dem radial innen liegenden Dralldornspalt. Bei einer konstruktiven Ausgestaltung in der vom ersten Aspekt der Erfindung vorgeschlagenen Weise nimmt die Höhe der Aktivflächen nach radial außen hin tendenziell immer weiter ab, so dass sich trotz des unterschiedlichen Umfangs der Dralldome eine zumindest etwa gleich große Aktivfläche ergibt.

Versuche des Erfinders haben ergeben, dass die Annäherung der Dimensionen der Dralldornflächen eine sehr gleichmäßige Schmelzeverteilung und somit eine hohe Folienqualität ergibt. Außerdem wird die Kanalführung in einem Dralldorn bei dessen technischer Konzipierung einfacher, wenn radial außen liegende Dralldornspalte tendenziell weniger Höhe beanspruchen als radial innen liegende Dralldornspalte.

Ein Gegenbeispiel lässt sich in der JP 56-67223 B erkennen: Die Anzahl der Wendel pro Dralldornspalt - welche in etwa mit der Höhe der Aktivfläche korrespondiert - beträgt im Verlauf von radial innen nach radial außen: 6, 4, 3, 4. Abweichend von der gemäß der Erfindung vorgeschlagenen Regel ist in der vorbekannten Druckschrift also hinsichtlich des äußeren Dralldornspalts die Regel nicht befolgt. Die Höhe der dortigen Aktivfläche ist lediglich kleiner als die Höhe der innersten Aktivfläche. Hinsichtlich der zweiten Aktivfläche von innen ist die äußerste Aktivfläche in der vorbekannten Druckschrift identisch, hinsichtlich der zweiten von außen ist die äußerste sogar größer.

Wenn in der vorbekannten Druckschrift hingegen der äußerste Dralldomspalt so niedrig ausgeführt wäre, dass dort nur drei Wendel vorhanden wären, so wäre die Regel erfüllt.

Bevorzugt weist jede äußere Aktivfläche in Bezug zu jeder inneren Aktivfläche eine geringere Höhe auf. Mit anderen Worten ausgedrückt führt dies zu einer Geometrie, bei welcher die Höhen der Aktivflächen von radial innen nach radial außen stetig abnehmen.

Nach einem zweiten Aspekt der Erfindung löst die gestellte Aufgabe ein Axial- oder Konuswendelverteiler für eine Blasfolienanlage, mit einem inneren Dralldornspalt mit einer inneren Wendelschar und mit einem äußeren Dralldornspalt mit einer äußeren Wendelschar, wobei die Wendelscharen der Dralldomspalte durch ihre Umgebenden eine innere und eine äußere Aktivfläche definieren, wobei der Wendelverteiler Aktivflächen mit unterschiedlichen Höhen aufweist, wobei jede äußere Aktivfläche in Bezug zu jeder inneren Aktivfläche eine gleiche oder geringere Höhe aufweist.

Gemäß der nach diesem Erfindungsaspekt gelehrten Regel kommt es im Verlauf von radial innen nach radial außen mindestens einmal zu einer Abnahme der Aktivflächenhöhe, aber niemals zu einer Zunahme.

Nach einem dritten Aspekt der Erfindung löst die gestellte Aufgabe ein Axial- oder Konuswendelverteiler für eine Blasfolienanlage, mit einem inneren Dralldornspalt mit einer inneren Wendelschar und mit einem äußeren Dralldornspalt mit einer äußeren Wendelschar, wobei die Wendelscharen der Dralldomspalte durch ihre Umgebenden eine innere und eine äußere Aktivfläche definieren, wobei der Wendelverteiler Aktivflächen mit unterschiedlichen Höhen aufweist, wobei jede äußere Aktivfläche in Bezug zu ihrer benachbarten inneren Aktivfläche eine gleiche oder geringere Höhe aufweist.

Eine solche Regel führt zu einer vergleichbaren Geometrie wie der zweite Aspekt der Erfindung.

Nach einem vierten Aspekt der Erfindung löst die gestellte Aufgabe ein Axial- oder Konuswendelverteiler für eine Blasfolienanlage, mit einem inneren Dralldomspalt mit einer inneren Wendelschar und mit einem äußeren Dralldomspalt mit einer äußeren Wendelschar, wobei die Wendelscharen der Dralldomspalte durch ihre Umgebenden eine innere und eine äußere Aktivfläche definieren, wobei die äußere Aktivfläche in ihrem Ausmaß dem Ausmaß der inneren Aktivfläche entspricht, und zwar mit einer Abweichung von maximal +/- 30 %, bevorzugt von +/- 20 %, besonders bevorzugt von +/- 10 %.

Auch dieser Erfindungsaspekt basiert auf der Erkenntnis, dass es von Vorteil ist, wenn die Aktivflächen zumindest im wesentlichen gleich groß bleiben, obwohl sich der Radius und somit der Umfang der einzelnen Dralldomspalte nach radial außen erhöht.

Es versteht sich, dass sich der nach dem vierten Aspekt der Erfindung vorgestellte Größenvergleich zwischen zwei Aktivflächen oder insgesamt innerhalb der Aktivflächen an einem Blaskopf in jeglicher Variation der einzelnen Dralldornspalte vorteilhaft umsetzen lässt, die im Rahmen der ersten drei Erfindungsaspekte in Relation gesetzt wurde, insbesondere wenn der Wendelverteiler Aktivflächen mit unterschiedlichen Höhen aufweist.

Nach einem fünften Aspekt der Erfindung löst die gestellte Aufgabe ein Axial- oder Konuswendelverteiler für eine Blasfolienanlage, mit einem inneren Dralldomspalt mit einer inneren Wendelschar und mit einem äußeren Dralldomspalt mit einer äußeren Wendelschar, wobei die Wendelscharen der Dralldomspalte durch ihre Umgebenden eine innere und eine äußere Aktivfläche definieren, wobei die äußere Wendelschar bei einem unterschiedlichen Wendelmuster gleiche Wendellängen aufweist wie die innere Wendelschar, und zwar mit einer Längenabweichung von maximal +/- 30 %, bevorzugt von +/- 20 %, besonders bevorzugt von +/- 10 %.

Diesem Erfindungsaspekt liegt die selbe Erkenntnis zugrunde. Ihm liegt weiter die Erkenntnis zugrunde, dass es Sinn machen kann, die Länge der einzelnen Wendel in einem radial außen liegenden Dralldornspalt im wesentlichen gleich lang auszuführen. Bei geeigneter Gestaltung kann auch dies zu einer sehr guten Homogenisierung der eingebrachten Schmelze führen.

Es wurde bereits erläutert, dass bei einem Vergleich einer radial innen liegenden Aktivfläche mit einer radial außen liegenden Aktivfläche die Höhe der radial außen liegenden Aktivfläche bevorzugt geringer ist.

Insbesondere wird vorgeschlagen, dass die Höhe der äußeren Aktivfläche höchstens 90 %, bevorzugt höchstens 80 %, besonders bevorzugt höchstens 70 %, der Höhe der inneren Aktivfläche aufweist.

Nach einem sechsten Aspekt der Erfindung löst die gestellte Aufgabe ein Verfahren zum Herstellen einer mehrlagigen Folie mit einer Blasfolienanlage, wobei eine Schmelzezuführung zu einer äußeren Ringschlitzdüse durch einen niedrigeren, äußeren Dralldorn erfolgt als eine Schmelzzuführung zu einer inneren Ringschlitzdüse durch einen inneren Dralldorn, um in beiden Dralldornen eine zumindest in etwa gleiche Aktivfläche von Wendeln zum Verteilen der Schmelze zu erzeugen.

Die Erfindung wird nachstehend anhand eines Ausführungsbeispiels unter Bezugnahme auf die Zeichnung näher erläutert.

Es zeigen:

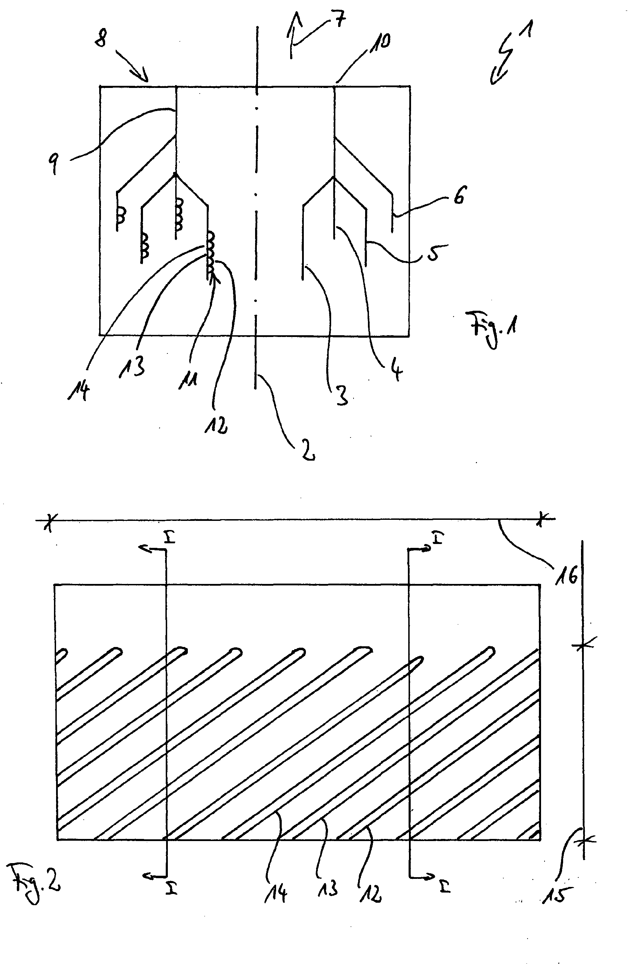

- Figur 1: schematisch einen Schnitt durch einen Axialwendelverteiler mit vier konzentrisch umeinander angeordneten Dralldornspalten und jeweils einseitig angeordneten Wendeln sowie
- Figur 2: schematisch eine Abwicklung eines radial innersten Dralldornspalts des Blaskopfes aus Figur 1.

Der Blaskopf 1 besteht im wesentlichen aus mehreren ringförmig umeinander gesetzten Elementen, welche zwischen sich eine verbundene Kanalstruktur formen. Insbesondere sind - konzentrisch um eine Längsachse 2 angeordnet - vier Dralldornspalte 3, 4, 5, 6 vorgesehen, welche in einer Verlaufsrichtung 7 zu einem oberen Ende 8 des Blaskopfes 1 hin sich zu einem Ringspalt 9 verbinden, der in eine Ringschlitzdüse 10 mündet.

Im Betrieb des Blaskopfes 1 wird in die vier Dralldomspalte 3, 4, 5, 6 jeweils an deren unterem Ende 11 (exemplarisch gekennzeichnet) Kunststoffschmelze für vier Folienlagen eingeleitet. Die Kunststoffschmelze fließt in den vier Dralldornspalten 3, 4, 5, 6 in einer schraubenförmigen Bewegung um die Längsachse 2 herum nach oben und verteilt sich auf diese Weise gleichmäßig in dem jeweiligen Dralldornspalt.

Um die schraubenförmige Bewegung der Schmelze zu erzwingen beziehungsweise zu unterstützen, sind in jedem Dralldorn 3, 4, 5, 6 Wendel 12, 13, 14 (exemplarisch beziffert) angeordnet.

Je nach Winkelneigung der Wendel 12, 13, 14 bestimmt sich die Länge der Wendel: Je nachdem, wie nahe diese - bezogen auf den Umfang eines Dralldornspalts - aneinander angeordnet sind, ergeben sich unterschiedliche Überlappungen der einzelnen Wendel in einem Schnitt. Mit zunehmendem Abstand eines Dralldornspalts von der Längsachse 2 nimmt eine Höhe 15 einer Aktivfläche, also im gezeigten Beispiel einer rechteckigen Umgrenzenden um die Wendel 12, 13, 14, ab.

Dies führt dazu, dass am Blaskopf 1 die vier Aktivflächen der vier Dralldornspalte 3, 4, 5, 6 nahezu gleich groß bleiben, obwohl deren Umfang 16 deutlich steigt.

Die Erfindung hat erkannt, dass es von Vorteil sein kann, wenn bei zunehmendem Umfang einer Wendelschar in einem Dralldornspalt die Höhe der Wendeln begrenzt werden kann, so dass sich in etwa eine gleiche mit Wendeln überzogene Fläche bei den Dralldornspalten einstellt. Die Erfindung bezeichnet diese Fläche als "Aktivfläche". Es werden zahlreiche Erfindungsaspekte vorgestellt, welche unterschiedliche Regeln angeben, wie die grundlegende Erkenntnis umgesetzt werden kann.

Unter anderem kann eine in etwa gleich groß gehaltene Aktivfläche zu ähnlichen Freispülbedingungen der Schmelze selbst bei unterschiedlichen Durchmessern der Wendelverteiler führen. Dies kann wohl mitunter darauf zurückgeführt werden, dass bei zumindest in etwa gleich groß gehaltenen Aktivflächen bei geeigneter Gestaltung erreicht werden kann, dass sich in den unterschiedlichen Dralldornen gleiche Wandschubspannungen einstellen und/oder somit ein zumindest in etwa gleich großer Druckabbau in den Dralldornen stattfinden kann.

## Patentansprüche

1. Axial- oder Konuswendelverteiler für eine Blasfolienanlage, mit einem inneren Dralldomspalt (3) mit einer inneren Wendelschar (12, 13, 14) und mit einem äußeren Dralldomspalt (4, 5, 6) mit einer äußeren Wendelschar, wobei die Wendelscharen der Dralldornspalte durch ihre Umgebenden eine innere und eine äußere Aktivfläche definieren, ***dadurch gekennzeichnet, dass*** jede äußere Aktivfläche in Bezug zu zumindest einer überwiegenden Zahl innerer Aktivflächen eine geringere Höhe (15) aufweist.

2. Wendelverteiler nach Anspruch 1, ***dadurch gekennzeichnet, dass*** jede äußere Aktivfläche in Bezug zu jeder inneren Aktivfläche eine geringere Höhe aufweist

3. Axial- oder Konuswendelverteiler für eine Blasfolienanlage, mit einem inneren Dralldornspalt mit einer inneren Wendelschar und mit einem äußeren Dralldornspalt mit einer äußeren Wendelschar, wobei die Wendelscharen der Dralldornspalte durch ihre Umgebenden eine innere und eine äußere Aktivfläche definieren, ***dadurch gekennzeichnet, dass*** der Wendelverteiler Aktivflächen mit unterschiedlichen Höhen aufweist, wobei jede äußere Aktivfläche in Bezug zu jeder inneren Aktivfläche eine gleiche oder geringere Höhe aufweist.

4. Axial- oder Konuswendelverteiler für eine Blasfolienanlage, mit einem inneren Dralldomspalt mit einer inneren Wendelschar und mit einem äußeren Dralldomspalt mit einer äußeren Wendelschar, wobei die Wendelscharen der Dralldornspalte durch ihre Umgebenden eine innere und eine äußere Aktivfläche definieren, ***dadurch gekennzeichnet, dass*** der Wendelverteiler Aktivflächen mit unterschiedlichen Höhen aufweist, wobei jede äußere Aktivfläche in Bezug zu ihrer benachbarten inneren Aktivfläche eine gleiche oder geringere Höhe aufweist.

5. Axial- oder Konuswendelverteiler für eine Blasfolienanlage, mit einem inneren Dralldomspalt mit einer inneren Wendelschar und mit einem äußeren Dralldomspalt mit einer äußeren Wendelschar, wobei die Wendelscharen der Dralldomspalte durch ihre Umgebenden eine innere und eine äußere Aktivfläche definieren, ***dadurch gekennzeichnet, dass*** die äußere Aktivfläche in ihrem Ausmaß dem Ausmaß der inneren Aktivfläche entspricht, und zwar mit einer Abweichung von maximal +/- 30 %, bevorzugt von +/- 20 %, besonders bevorzugt von +/- 10 %.

6. Axial- oder Konuswendelverteiler für eine Blasfolienanlage, mit einem inneren Dralldornspalt mit einer inneren Wendelschar und mit einem äußeren Dralldomspalt mit einer äußeren Wendelschar, wobei die Wendelscharen der Dralldomspalte durch ihre Umgebenden eine innere und eine äußere Aktivfläche definieren, ***dadurch gekennzeichnet, dass*** die äußere Wendelschar bei einem unterschiedlichen Wendelmuster gleiche Wendellängen aufweist wie die innere Wendelschar, und zwar mit einer Abweichung von maximal +/- 30 %, bevorzugt von +/- 20 %, besonders bevorzugt von +/- 10 %.

7. Wendelverteiler nach einem der vorhergehenden Ansprüche, ***dadurch gekennzeichnet, dass*** die Höhe der äußeren Aktivfläche der Höhe der inneren Aktivfläche, multipliziert mit dem Quotienten eines inneren Durchmessers zu einem äußeren Durchmesser, entspricht, und zwar mit einer Abweichung eines Höhenverhältnisses zum Quotienten von maximal +/- 30 %, bevorzugt von +/- 20 %, besonders bevorzugt von +/- 10 %.

8. Wendelverteiler nach einem der vorhergehenden Ansprüche, ***dadurch gekennzeichnet, dass*** die Höhe der äußeren Aktivfläche geringer ist.

9. Wendelverteiler nach einem der vorhergehenden Ansprüche, ***dadurch gekennzeichnet, dass*** die Höhe der äußeren Aktivfläche höchstens 90%, bevorzugt höchstens 80%, besonders bevorzugt höchstens 70%, der Höhe der inneren Aktivfläche aufweist.

10. Verfahren zum Herstellen einer mehrlagigen Folie mit einer Blasfolienanlage, wobei eine Schmelzezuführung zu einer äußeren Ringschlitzdüse durch einen niedrigeren, äußeren Dralldorn erfolgt als eine Schmelzezuführung zu einer inneren Ringschlitzdüse durch einen inneren Dralldorn, um in beiden Dralldornen eine zumindest in etwa gleiche Aktivfläche von Wendeln zum Verteilen der Schmelze zu erzeugen.
